# EUROPÄISCHE PATENTSCHRIFT

(11) **EP 4 030 231 B1**
(45) Veröffentlichungstag und Bekanntmachung des Hinweises auf die Patenterteilung: **09.09.2026**
(21) Anmeldenummer: 21151714.9
(22) Anmeldetag: 14.01.2021
(51) Int. Cl.: G02F 2/02

(54) **SPINTRONISCHES BAUELEMENT**
SPINTRONIC COMPONENT
COMPOSANT SPINTRONIQUE

(43) Veröffentlichungstag der Anmeldung: 20.07.2022
(73) Patentinhaber: Martin-Luther-Universität Halle-Wittenberg, 06108 Halle (Saale) (DE)
(72) Erfinder: Schmidt, Georg, 06120 Halle (DE)
(74) Vertreter: Heuer, Wilhelm

(56) Entgegenhaltungen:
- CN-A- 110 441 929
- CN-A- 110 535 003
- US-A1- 2019 227 404
- T. KAMPFRATH ET AL: "Terahertz spin current pulses controlled by magnetic heterostructures", NATURE NANOTECHNOLOGY, vol. 8, no. 4, 31 March 2013 (2013-03-31), London, pages 256 - 260, XP055766639, ISSN: 1748-3387, DOI: 10.1038/nnano.2013.43

## Beschreibung

Die vorliegende Erfindung betrifft ein spintronisches Bauelement, das zur Erzeugung von kurzen Impulsen elektromagnetischer Strahlung im THz-Bereich sowie von kurzen elektrischen Impulsen nutzbar ist. Quellen von kurzpulsiger THz-Strahlung sind Gegenstand intensiver Forschung und Entwicklung, da zahlreiche Anwendungen z.B. auf dem Gebiet des Nachweises von chemischen Substanzen erwartet werden.

Vor einigen Jahren wurde von T. Kampfrath ein sogenannter spintronischer Emitter für THz Strahlung demonstriert, in dem aus einer metallischen Multilage durch Bestrahlung mit einem fs-Laser von Vorder- oder Rückseite ein THz Puls erzeugt wird (z.B. Nature Nanotechnology Volume 8, pages256-260(2013)). Prinzipiell erscheint es zwar möglich, die Intensität der mit einem solchen Aufbau erzeugten THz-Strahlung zu modulieren, indem die Energie der auftreffenden Laserpulse variiert wird; in der Praxis erweist es sich jedoch als schwierig, zu verhindern, dass zusammen mit der Energie auch andere Eigenschaften des Laserpulses verändert werden, die die Effizienz der Konversion in THz-Strahlung beeinflussen. Indem am Laser vorgenommene Änderungen sich auf die Temperaturverteilung im aktiven Lasermedium oder in Absorbern auswirken, können sie die Impulseigenschaften noch lange nach ihrer Vornahme verändern. Eine Steuerung der Intensität der THz-Strahlung über den Laser ist daher nur in einem geschlossenen Regelkreis mit einer Zeitkonstanten möglich, die um Größenordnungen länger ist als die Impulsperiode des Lasers.

CN 110 441 929 A offenbart einen THz-Emitter mit einem Substrat und einer über dem Substrat aufgebrachten ferromagnetischen Schicht, bei dem die Schicht als Gitter strukturiert ist, so dass durch Drehen des Emitters um eine Oberflächennormale der Winkel zwischen einer Richtung des Gitters und der Polarisation des darauf eintreffenden Laserstrahls und mit diesem die Intensität der THz-Emission gesteuert werden kann. Da keine Änderungen am Laserpuls selber erforderlich sind, ist zwar eine schnellere Veränderung der THz-Intensität möglich; dennoch ist die Geschwindigkeit der Veränderung begrenzt durch die Notwendigkeit, das Gitter zu drehen und dazu sein Trägheitsmoment zu überwinden, und der Aufwand ist hoch, da zum Drehen ein schneller und exakt steuerbarer Motor benötigt wird. Ebenso wäre es denkbar, einen Elektromagneten zur Drehung oder Umkehr der Magnetisierungsrichtung zu verwenden. Aufgrund der Induktivitäten der Elektromagneten ist jedoch auch hierbei die Schaltgeschwindigkeit eingeschränkt. CN 110 535 003 A offenbart eine Spin-THz-Emissionsvorrichtung.

Eine Aufgabe der Erfindung ist, ein spintronisches Bauelement zu schaffen, dessen Konversionseffizienz vorhersagbar und mit hoher, nicht durch Massenträgheit oder Induktivität begrenzter Geschwindigkeit veränderbar ist.

Die Aufgabe wird gelöst, indem bei einem spintronischen Bauelement mit einer Dünnschichtstruktur, die wenigstens einen in einer Längsrichtung orientierten Streifen mit wenigstens einer in der Längsrichtung magnetisierten ferromagnetischen Schicht und wenigstens eine metallische nichtmagnetische Schicht umfasst, ein Stromleiter sich entlang des Streifens erstreckt und mit wenigstens zwei Anschlüssen versehen ist, über die ein Stromfluss in der Längsrichtung durch den Stromleiter antreibbar ist.

In einem schmalen ferromagnetischen Streifen wie dem des erfindungsgemäßen Bauelements ist - sofern dem keine Kristallanisotropie entgegensteht - die Magnetisierung aufgrund der sogenannten Formanisotropie ohne externes Magnetfeld immer in der Längsrichtung des Streifens magnetisiert. Der Stromleiter erzeugt, wenn er von Strom durchflossen ist, ein Magnetfeld, dessen Feldlinien um den Leiter herumlaufen und somit quer zur Längsrichtung des Streifens orientiert sind. Die Magnetisierung des Streifens wird dadurch gedreht und bekommt eine zur Stärke des Stroms proportionale Komponente quer zur Längsrichtung. Der Stromfluss induziert somit in der unmittelbar von der Dünnschichtstruktur emittierten THz-Strahlung eine Drehung der Polarisation. Mit Hilfe eines geeignet platzierten Polarisationsfilters kann daraus linear polarisierte THz-Strahlung bereitgestellt werden, deren Intensität mit der Stromstärke je nach gewählter Orientierung des Filters zu- oder abnimmt.

Der Laserimpuls bewirkt ferner in der nichtmagnetischen metallischen Schicht eine Ladungsverschiebung quer zu Feldrichtung. Da bei stromlosem Stromleiter das Magnetfeld in der Schicht in Längsrichtung des Streifens orientiert ist, führt dies zu keiner zwischen den Längsenden der nichtmagnetischen metallischen Schicht abgreifbaren Spannungsdifferenz. Eine solche Spannungsänderung tritt erst dann auf, wenn die Magnetisierung eine Komponente quer zur Längsrichtung aufweist, und ist dann proportional zu dieser Komponente. Das erfindungsgemäße Bauteil kann daher nicht nur zur Erzeugung von THz-Strahlung genutzt werden, sondern auch zur Erzeugung von ultrakurzen elektrischen Impulsen von steuerbarer Intensität und Vorzeichen.

Die metallische nichtmagnetische Schicht kann Teil des Streifens sein, sie kann sich aber auch über die Ränder des Streifens hinaus erstrecken und z.B. mehrere Streifen der ferromagnetischen Schicht tragen.

Um ein äußeres Magnetfeld in Querrichtung in der ferromagnetischen Schicht der Dünnschichtstruktur effizient erzeugen zu können, sollte der Strom oder zumindest das Zentrum der Stromverteilung von der ferromagnetischen Schicht selber ferngehalten werden. Zu diesem Zweck kann eine isolierende Schicht zwischen dem Stromleiter und dem Streifen vorgesehen sein.

Es kann aber auch ausreichen, den Stromleiter so gut leitfähig zu machen, dass er selbst dann, wenn zwischen ihm und der ferromagnetischen Schicht ein leitender Kontakt besteht, einen Großteil des Stromflusses aufnimmt. Zu diesem Zweck sollte der Stromleiter einen längenbezogenen Widerstand in der Längsrichtung aufweisen, der kleiner, vorzugsweise um ein Mehrfaches kleiner, ist als ein entsprechender Widerstand der ferromagnetischen Schicht. Unter Umständen kann in diesem Fall der Stromleiter mit der metallischen nichtmagnetischen Schicht identisch sein.

Der Streifen und der Stromleiter können als Schichten auf einem Substrat realisiert sein. Insbesondere kann die oben erwähnte isolierende Schicht das Substrat bilden.

Um am Ort der Dünnschichtstruktur ein externes Magnetfeld effizient zu erzeugen, sollte deren Abstand zum Stromleiter möglichst klein sein. Wenn gesehen in Richtung einer Oberflächennormalen des Streifens der Streifen und der Stromleiter überlappen, kann der Abstand zwischen ihnen auf die Dicke der isolierenden Schicht reduziert werden.

Damit ein solches Magnetfeld auf der ganzen Fläche des Dünnschichtsystems homogen ist, ist es ferner von Vorteil, wenn der Streifen, gesehen in der Richtung der Oberflächennormalen, nicht über die Ränder des Stromleiters übersteht.

Einer alternativen Ausgestaltung zufolge liegen der Streifen und der Stromleiter in in Richtung einer Oberflächennormalen des Streifens gegeneinander versetzten Ebenen, und, gesehen in Richtung der Oberflächennormalen (z), überlappt der Streifen mit einem Fenster des Stromleiters. Das Fenster ermöglicht einen Betrieb des Bauelements in Transmission. Wenn Ströme im Leiter auf beiden Seiten des Fensters in gleicher Richtung fließen, dann heben deren Beiträge zum Magnetfeld unmittelbar im Fenster, in der Ebene des Leiters, einander auf. Da aber der ferromagnetische Streifen sich nicht direkt auf dem Leiter befindet, wirkt auf diesen weiterhin das zur Steuerung notwendige Magnetfeld. Der Versatz zwischen Leiter und ferromagnetischem Streifen kann insbesondere dadurch realisiert sein, dass der Streifen und der Stromleiter auf entgegengesetzten Seiten eines Substrats angeordnet sind.

Zum Abgreifen eines induzierten Spannungsimpulses kann der Streifen, vorzugsweise die die metallische nichtmagnetische Schicht desselben, an seinen Enden mit Anschlüssen versehen sein.

Um die Effizienz des spintronischen Bauelements im Hinblick auf die THz-Emission zu steigern, kann die Dünnschichtstruktur mit einer Antenne gekoppelt sein. Die Antenne kann durch zur Dünnschichtstruktur koplanare, insbesondere auf demselben Substrat gebildete Leiterbahnen oder - flächen realisiert sein, z.B. in Form von zwei parallelen Leiterbahnen, zwischen denen die Dünnschichtstruktur angeordnet ist, oder zwei T-förmigen Leiterbahnen, die zu einer H-Form kombiniert sind, wobei die Dünnschichtstruktur in einer Lücke zwischen einander zugewandten Schenkeln der zwei T-Formen platziert ist.

Einer Weiterbildung zufolge ist der oben erwähnte Streifen ein erster von mehreren Streifen, wobei ein zweiter der Streifen sich parallel zum ersten Streifen erstreckt, und dem ersten und dem zweiten Streifen zugeordnete Stromleiter sind angeordnet, um mit dem Stromfluss in entgegengesetzten Richtungen beaufschlagt zu werden. Dies hat zur Folge, dass die Feldkomponenten in Querrichtung in beiden Streifen entgegengesetzt zueinander sind und dementsprechend die in der Querrichtung polarisierten Anteile ihrer THz-Emission einander aufheben. So ist es möglich, über die Stärke des angelegten Stroms die Intensität der THz-Emission unmittelbar zu modulieren, ohne dass ein Polarisator benötigt wird.

Weitere Bestandteile des erfindungsgemäßen spintronischen Bauelements können sein:
- die bereits oben erwähnte Laserquelle zum Liefern der zum Erzeugen der THz-Strahlung oder der Spannungsimpulse benötigten ultrakurzen Laserimpulse;
- der Polarisator für von der Dünnschichtstruktur emittierte THz-Strahlung;
- eine mit den Anschlüssen des Stromleiters verbundene Stromquelle, wobei die Stromquelle einen Regler zum Regeln einer Stromstärke eines Stroms durch den Stromleiter umfassen sollte.

Gegenstände der Erfindung sind ferner
- ein Verfahren zum Erzeugen von THz-Strahlung mit einem spintronischen Bauelement wie oben beschrieben, mit den Schritten Erzeugen eines Stromflusses im Stromleiter;
   Einstrahlen von ultrakurzen Laserpulsen auf die Dünnschichtstruktur; sowie
- ein Verfahren zum Erzeugen von ultrakurzen elektrischen Impulsen mit dem spintronischen Bauelement, mit den Schritten Erzeugen eines Stromflusses im Stromleiter;
Einstrahlen von ultrakurzen Laserpulsen auf die Dünnschichtstruktur und Abgreifen eines resultierenden elektrischen Impulses an Enden des Streifens.

Durch Variieren der Stärke des Stromflusses kann die Polarisation der von der Dünnschichtstruktur emittierten THz-Strahlung, die Intensität der THz-Strahlung jenseits eines Polarisators oder die Stärke des elektrischen Impulses gesteuert werden.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische perspektivische Ansicht einer elementaren Ausgestaltung des spintronischen Bauelements;
- Fig. 2: das Bauelement einschließlich Peripherievorrichtungen;
- Fig. 3: eine Ansicht einer bevorzugten Weiterentwicklung des spintronischen Bauelements;
- Fig. 4: eine Draufsicht auf ein spintronisches Bauelement mit einer Antenne;
- Fig. 5: eine erste Variante des Bauelements aus Fig. 2 im Querschnitt
- Fig. 6: eine zweite Variante im Querschnitt;
- Fig. 7: eine dritte Variante im Querschnitt;
- Fig. 8: eine vierte Variante im Querschnitt; und
- Fig. 9: eine Draufsicht auf ein Bauelement gemäß einer zweiten Weiterentwicklung.

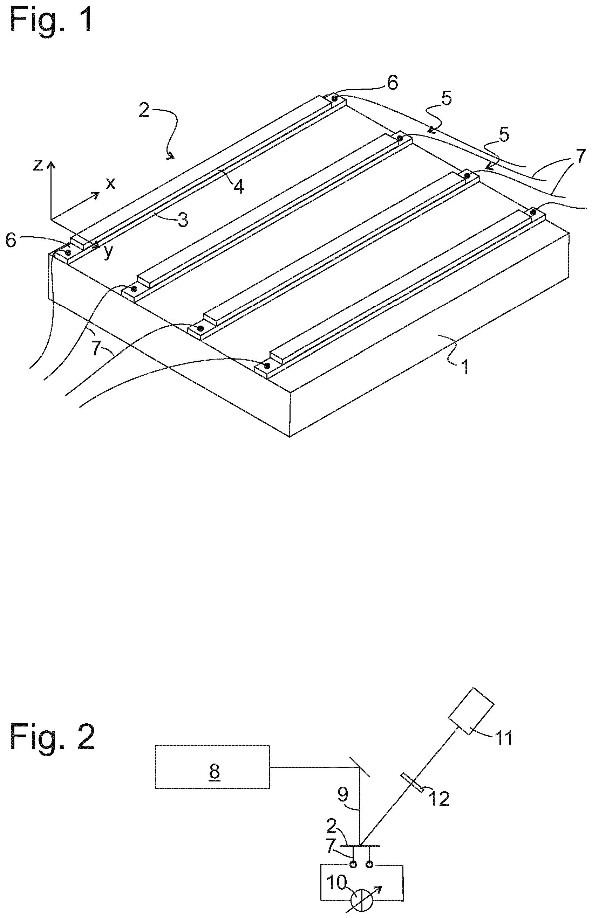

Fig. 1 zeigt in einer schematischen perspektivischen Ansicht ein spintronisches Bauelement gemäß einer ersten, einfachsten Ausgestaltung der Erfindung. Eine auf einem Substrat 1 gebildete Dünnschichtstruktur 2 umfasst eine nichtmagnetische Schicht 3 aus Metall mit starker Spin-Bahn-Kopplung wie etwa Pt, Ta oder W, und auf dieser ist eine ferromagnetische Schicht 4 aufgebracht. Alternativ kann die ferromagnetische Schicht zwischen dem Substrat und der nichtmagnetischen Schicht angeordnet oder zwischen zwei nichtmagnetischen Schichten, vorzugsweise solchen mit entgegengesetzten Vorzeichen der Spin-Bahn-Kopplung, angeordnet sein. Die Schichten 3, 4 bilden eine Mehrzahl von Streifen 5, die sich parallel in einer Längsrichtung x erstrecken.

Die ferromagnetische Schicht 4 ist in jedem Streifen 5 etwas kürzer als die nichtmagnetische Schicht 3, so dass an den Längsenden jedes Streifens 5 ein Stück der nichtmagnetischen Schicht 3 freiliegt und einen Anschluss 6 für eine Versorgungsleitung 7 bildet.

Die ferromagnetische Schicht 4 ist in der Längsrichtung x magnetisiert. Wenn das Bauelement zur Erzeugung ultrakurzer elektrischer Impulse vorgesehen ist, ist es ohne Bedeutung, ob die Schicht 4 in einem Streifen 5 auf ihrer ganzen Länge gleichsinnig magnetisiert ist oder ob in der Schicht 4 entgegengesetzt magnetisierte Zonen in der Längsrichtung x miteinander abwechseln. Bei Verwendung des Bauelements zur Erzeugung von THz-Strahlung ist es bevorzugt, wenn die Magnetisierung der Schicht 4 über die gesamte Länge jedes Streifens 5 hinweg einheitlich ausgerichtet ist; um dies sicherzustellen, kann für die Schicht 4 ein weichmagnetisches Material verwendet werden, das seine Magnetisierung an einem schwachen äußeren Magnetfeld eines in der Fig. nicht dargestellten Permanentmagneten ausrichtet.

Die Querschnitte der Schichten 3, 4 in jedem Streifen 5 sind an die spezifischen Leitfähigkeiten der die Schichten 3, 4 bildenden Materialien so angepasst, dass der Widerstand pro Längeneinheit in der Richtung x für die nichtmagnetische Schicht 3 deutlich kleiner ist als für die ferromagnetische Schicht 4, so dass nur ein kleiner Teil eines über die Anschlüsse 6 eingespeisten Stroms den Weg durch die ferromagnetische Schicht 4 nimmt.

Der Strom, der in der nichtmagnetischen Schicht 3 fließt, erzeugt ein die Schicht 3 umgebendes Magnetfeld, das im Folgenden zur Unterscheidung vom Permanentmagnetfeld der Schicht 4 als Oersted-Feld bezeichnet wird. Das Oersted-Feld ist am Ort der Schicht 4 in einer y-Richtung, orthogonal zur x-Richtung und parallel zur Oberfläche des Substrats 1, orientiert.

Indem die Schicht 4 vom Oersted-Feld durchdrungen wird, kommt es zu einer Verdrehung der Magnetisierung, d.h. zum Auftreten einer Komponente der Magnetisierung quer zur x-Richtung, die in erster Näherung proportional zur Stromstärke in der ferromagnetischen Schicht 4 ist.

Wenn die Dünnschichtstruktur 2 von einem Laserimpuls getroffen wird, dann treibt dessen elektrisches Feld eine Bewegung der Ladungsträger in der nichtmagnetischen Schicht 3 orthogonal zur Richtung der Magnetisierung an, und diese wiederum führt zur Emission von elektromagnetischer Strahlung. Bei Verwendung von ultrakurzen Laserpulsen mit einer Dauer von einigen 10 fs liegt die Frequenz dieser Strahlung im THz-Bereich, und ihr E-Feld ist senkrecht zur Magnetisierung des Ferromagneten polarisiert.

Fig. 2 zeigt schematisch einen Aufbau mit der Dünnschichtstruktur 2, einem Femtosekundenlaser 8, dessen Strahl 9 auf die Dünnschichtstruktur 2 gelenkt ist, und einer Gleichstromquelle 10, die mit den Anschlüssen 6 verbunden ist, um einen Strom von einstellbarer Stromstärke durch jeden Streifen 5 fließen zu lassen und dadurch die Richtung der Magnetisierung zu drehen. Von der Dünnschichtstruktur 2 freigesetzte THz-Strahlung wird auf einen Versuchsaufbau 11 gelenkt.

Der Abstand zwischen den Streifen 5 kann einerseits klein im Vergleich zum Querschnitt des Strahls 9 gewählt sein, so dass jeder Impuls des Lasers 8 mehrere Streifen 5 trifft und zur Emission anregt, andererseits aber größer als die Wellenlänge wenigstens eines Teils des emittierten THz-Spektrums gewählt sein. Dann ist für eine bestimmte Wellenlänge dieses Teils des Spektrums, analog zur aus der klassischen Optik bekannten Beugung am Strichgitter, jeweils nur in einer bestimmten Emissionsrichtung eine konstruktive Interferenz von Beiträgen der verschiedenen Streifen 5 gegeben, und indem der Versuchsaufbau 11 in dieser Richtung platziert wird, kann er selektiv mit THz-Wellen dieser Wellenlänge versorgt werden.

Durch Variieren der von der Gleichstromquelle 10 gelieferten Stromstärke kann das Magnetfeld an der Oberfläche der Dünnschichtstruktur 2 und damit die Polarisationsrichtung der THz-Wellen gedreht werden, die den Versuchsaufbau 11 erreichen. Wenn zwischen der Dünnschichtstruktur 2 und dem Versuchsaufbau 11 ein Polarisator 12 angebracht ist, kann stattdessen die Intensität der dem Versuchsaufbau 11 zugeführten THz-Strahlung variiert werden. Der Polarisator 12 kann orientiert sein, um bei verschwindendem Strom durch die Schicht 3 minimale Transmission aufzuweisen, so dass mit der Stärke des Stroms auch die Intensität der THz-Strahlung am Versuchsaufbau 11 zunimmt, oder er kann so orientiert sein, dass bei verschwindender Stromstärke die Transmission maximal ist und durch Einspeisen des Stroms in die Schicht 3 heruntergeregelt werden kann.

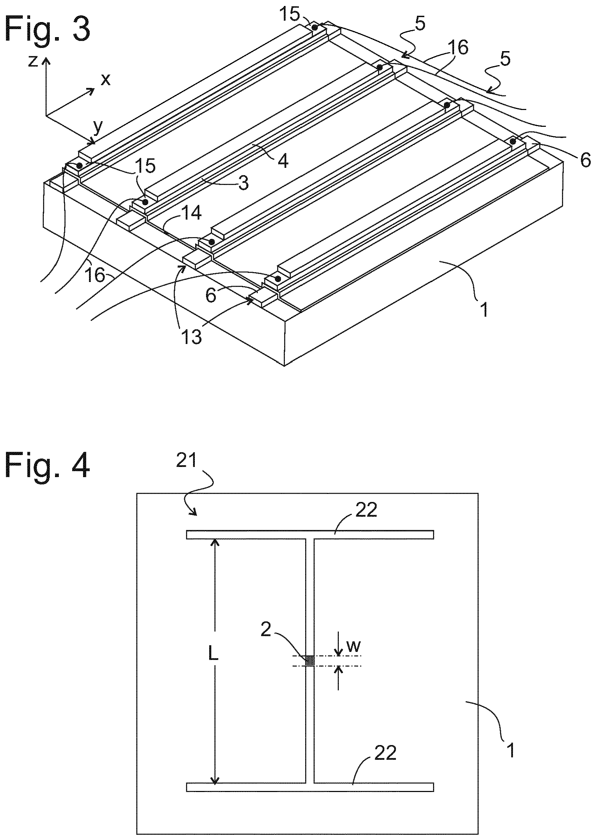

Fig. 3 zeigt eine Weiterbildung des spintronischen Bauelements in einer zu Fig. 1 analogen Ansicht. Auf dem Substrat 1 ist hier zunächst ein Stromleiter 13 als dünne Schicht abgeschieden, auf diesem eine isolierende Schicht 14 und auf der isolierenden Schicht die Streifen 5 mit der nichtmagnetischen Schicht 3 und der ferromagnetischen Schicht 4. Der Stromleiter 13 ist hier kongruent zu den Streifen 5 strukturiert und an seinen Enden mit den Anschlüssen 6 versehen, um durch Stromfluss in dem Stromleiter 13 ein Oersted-Feld in y-Richtung in den Streifen 5 erzeugen zu können. Die Versorgungsleitungen 7 sind in der Fig. 3 der Übersichtlichkeit halber nicht dargestellt.

Wenn die Dünnschichtstruktur 2 von einem Impuls des Lasers 8 getroffen wird, werden in dieser Spannungsimpulse mit einer zur Stärke der Magnetfeldkomponente in y-Richtung in der Schicht 3 proportionalen Amplitude erzeugt. Um diese abgreifen zu können, sind an den Enden der Streifen 5 jeweils Anschlüsse 15 für Signalleitungen 16 gebildet, z.B. indem dort jeweils ein Stück der Schicht 3 nicht von der ferromagnetischen Schicht 4 bedeckt ist. Die isolierende Schicht 14 ermöglicht eine Impedanzanpassung zwischen den Streifen 5 und einem über die Signalleitungen 16 angeschlossenen Verbraucher.

Die Struktur der Fig. 3 kann erzeugt werden, indem auf einem Substrat 1 aus einem gegen die nachfolgenden Abscheideschritte beständigen elektrisch isolierenden Material sukzessive der Stromleiter 13, die isolierende Schicht 14, die nichtmagnetische Schicht 3 und die ferromagnetischen Schicht 4 abgeschieden werden.

Fig. 4 zeigt eine Draufsicht auf ein spintronisches Bauelement, bei dem auf dem Substrat 1 eine an die Dünnschichtstruktur 2 gekoppelte Antenne 21 ausgebildet ist. Die Antenne 21 ist durch Leiterbahnen 22 gebildet, die nach demselben Verfahren wie der (in Fig. 4 nicht eigens dargestellte) Stromleiter 13 und in einem gleichen Prozessschritt wie dieser erzeugt sein können. Die in der Draufsicht etwa H-förmige Antenne 21 besteht aus zwei T-förmigen Teilen, wobei die Dünnschichtstruktur 2 in einem Zwischenraum zwischen einander gegenüberliegenden Enden der Beine der zwei T's angeordnet ist. Die Kantenlänge w der Dünnschichtstruktur 2 entspricht im Wesentlichen dem Durchmesser eines auf sie fokussierten Laserstrahls und beträgt nicht mehr als 30 µm, hier z.B. 10 µm. Der Abstand L zwischen den zueinander parallele Querbalken der T's bildenden Leiterbahnen 22 beträgt z.B. 200 µm. Breite und Abstand der Streifen 5 der Dünnschichtstruktur 2 beträgt nicht mehr als 2 µm.

Die Antenne 21 kann hier die Funktion der Versorgungsleitungen 7 aus Fig. 1 übernehmen, indem sie mit den Schichten 3, 4 der Streifen 5 oder - sofern vorhanden - mit dem Stromleiter 13 verbunden ist.

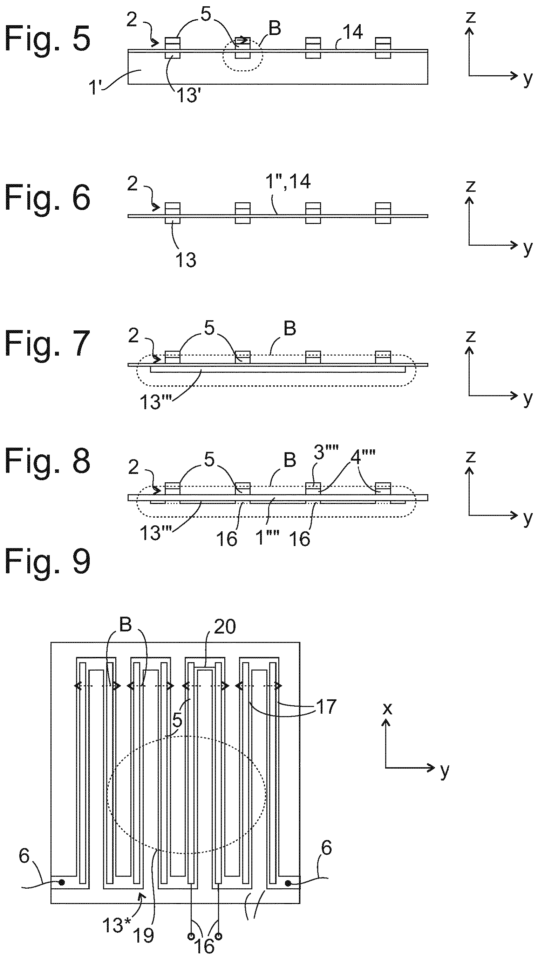

Denkbar ist auch, wie in Fig. 5 anhand eines Schnitts orthogonal zur x-Richtung gezeigt, ein Substrat 1' aus einem Halbleitermaterial zu verwenden, einen Stromleiter 13' durch Dotieren in dem Substrat 1' zu erzeugen und anschließend die Oberfläche des Substrats 1' zu oxidieren, um eine isolierende Schicht 14' zu erhalten, auf der dann wiederum die Dünnschichtstruktur 2 erzeugt wird.

Fig. 6 zeigt, ebenfalls in einem Schnitt orthogonal zur x-Richtung, eine Variante, bei der die Dünnschichtstruktur 2 und der Stromleiter 13 auf verschiedenen Seiten eines Substrats 1" gebildet sind und das Substrat 1" gleichzeitig die Rolle der isolierenden Schicht 14 übernimmt.

Fig. 7 zeigt eine Abwandlung, die mit allen Varianten der Fig. 3 bis 6 kombinierbar ist: Der Stromleiter 13‴ ist hier breiter als die daraufliegenden Streifen 5; im gezeigten Fall sind die einzelnen Streifen des Stromleiters zu einer zusammenhängenden Fläche verschmolzen. Auf die Stärke und Richtung des Oersted-Feldes B am Ort der Streifen 5 hat dies keinen Einfluss.

In der Abwandlung der Fig. 8 sind in dem Stromleiter 13"" langgestreckte Fenster 18 ausgespart. Wenn auf beiden Seiten der Fenster 18 Strom in dem Stromleiter 13"" in gleicher Richtung fließt, heben die Beiträge der auf verschiedenen Seiten eines Fensters 18 fließenden Ströme zum Oersted-Feld einander im Fenster und in dessen unmittelbarer Umgebung auf. Die Dicke des Substrats 1ʺʺ ist groß genug gewählt, z.B. wenigstens gleich der halben Breite der Fenster 18, um sicherzustellen, dass die Streifen 5 dennoch einer ausreichenden Stärke des Oersted-Feldes ausgesetzt sind, um eine Drehung der Magnetisierung in der ferromagnetischen Schicht 4"" zu bewirken. So ist es möglich, das spintronische Bauelement in Transmission zu betreiben, d.h. den Laserstrahl von der Seite der Streifen 5 her auf das Bauelement zu lenken und durch das Substrat 1"" und die Fenster 18 hindurch emittierte THz-Strahlung zu nutzen, oder umgekehrt, wenn das Substrat für den Laserstrahl transparent ist, diesen durch das Substrat hindurch auf die Streifen 5 zu lenken.

Fig. 9 zeigt wiederum eine Abwandlung, deren charakteristische Merkmale mit allen Ausgestaltungen der Fig. 3 bis 6 kombinierbar sind. In der Längsrichtung x orientierte Streifen 17 des Stromleiters 13* sind hier jeweils an ihren Enden zu einer Mäanderstruktur in Reihe verbunden, so dass jeweils benachbarte Streifen in entgegengesetzter Richtung von Strom durchflossen werden und die darauf liegenden Streifen 5 der Dünnschichtstruktur jeweils entgegengesetzt orientierten Oersted-Feldern B ausgesetzt sind. Der Querschnitt des Laserstrahls 9 beträgt ein Mehrfaches des Abstands der Streifen 5, so dass mehrere Streifen 5 gleichzeitig vom Laserstrahl getroffen werden und ihre Emissionen sich überlagern. Folge daraus ist, dass diejenigen Anteile der THz-Emission benachbarter Streifen 17, die auf die Oersted-Felder zurückgehen, jeweils gegenphasig sind und einander auslöschen. Die THz-Emission der Dünnschichtstruktur 2 ist daher bestimmt durch die Magnetisierungskomponente in der Längsrichtung x, daher nimmt ihre Intensität umso mehr ab, je stärker die Magnetisierung der Streifen 17 unter dem Einfluss des Oersted-Feldes aus der x-Richtung abgelenkt wird.

Aus einem vom Laserstrahl getroffenen Bereich 19 der Streifen 5 breiten sich Spannungsimpulse in Längsrichtung der Streifen 5 aus, haben aber jeweils aufgrund der antiparallelen Oersted-Felder entgegengesetzte Vorzeichen. Da in benachbarten Streifen die Laufzeiten der Spannungsimpulse jedem Ende der Streifen 5 gleich sind, können sie einander an einem Ende gegenseitig auslöschen, indem dort eine leitende Verbindung 20 zwischen den nichtmagnetischen Schichten 3 der Streifen gebildet ist. Über an den jeweils anderen Enden platzierte Signalleitungen 16 ist ein entsprechend verstärkter elektrischer Impuls abgreifbar.

### Bezugszeichen

- 1: Substrat
- 2: Dünnschichtstruktur
- 3: nichtmagnetische Schicht
- 4: ferromagnetische Schicht
- 5: Streifen
- 6: Anschluss
- 7: Versorgungsleitung
- 8: Femtosekundenlaser
- 9: Strahl
- 10: Gleichstromquelle
- 11: Versuchsaufbau
- 12: Polarisator
- 13: Stromleiter
- 14: isolierende Schicht
- 15: Anschluss
- 16: Signalleitung
- 17: Streifen
- 18: Fenster
- 19: Bereich
- 20: Verbindung
- 21: Antenne
- 22: Leiterbahn

## Patentansprüche

1. Spintronisches Bauelement mit einer Dünnschichtstruktur (2), die wenigstens einen in einer Längsrichtung (x) orientierten Streifen (5) umfasst, wobei der Streifen (5) wenigstens eine in der Längsrichtung magnetisierte ferromagnetische Schicht (4) umfasst und die Dünnschichtstruktur (2) ferner wenigstens eine metallische nichtmagnetische Schicht (3) umfasst, wobei der Streifen schmal genug ist, um eine Magnetisierung der ferromagnetischen Schicht (4) durch Formanisotropie zu gewährleisten, und dass sich ein Stromleiter (13) entlang des Streifens (5) erstreckt und mit wenigstens zwei Anschlüssen (6) versehen ist, über die ein Stromfluss in der Längsrichtung (x) durch den Stromleiter (13) antreibbar ist.

2. Spintronisches Bauelement nach Anspruch 1, **dadurch gekennzeichnet, dass** zwischen dem Stromleiter (13) und dem Streifen (5) eine isolierende Schicht (14) vorgesehen ist.

3. Spintronisches Bauelement nach Anspruch 1, **dadurch gekennzeichnet, dass** der Stromleiter (3 ,13) einen längenbezogenen Widerstand in der Längsrichtung (x) aufweist, der kleiner ist als derjenige der ferromagnetischen Schicht (4).

4. Spintronisches Bauelement nach einem der vorhergehenden Ansprüche, **dadurch gekennzeichnet, dass** der Streifen (5) und der Stromleiter (3, 13) als Schichten auf einem Substrat (1) realisiert sind.

5. Spintronisches Bauelement nach einem der vorhergehenden Ansprüche, **dadurch gekennzeichnet, dass** gesehen in Richtung einer Oberflächennormalen (z) des Streifens (5) der Streifen (5) und der Stromleiter (13) überlappen.

6. Spintronisches Bauelement nach einem der Ansprüche 1 bis 4, **dadurch gekennzeichnet, dass** der Streifen (5) und der Stromleiter (13""") in in Richtung einer Oberflächennormalen (z) des Streifens (5) gegeneinander versetzten Ebenen liegen und dass gesehen in Richtung der Oberflächennormalen (z) der Streifen (5) und ein Fenster des Stromleiters (13) überlappen.

7. Spintronisches Bauelement nach einem der vorhergehenden Ansprüche, **dadurch gekennzeichnet, dass** der Streifen (5) an seinen Enden mit Anschlüssen (15) versehen ist.

8. Spintronisches Bauelement nach einem der vorhergehenden Ansprüche, **dadurch gekennzeichnet, dass** die Dünnschichtstruktur (2) mit einer Antenne gekoppelt ist.

9. Spintronisches Bauelement nach einem der vorhergehenden Ansprüche, bei dem der Streifen (5) ein erster Streifen ist und ein zweiter Streifen (5) sich parallel zum ersten Streifen erstreckt, und bei dem dem ersten und dem zweiten Streifen (5) zugeordnete Stromleiter (13) angeordnet sind, um mit dem Stromfluss in entgegengesetzten Richtungen beaufschlagt zu werden.

10. Spintronisches Bauelement nach einem der vorhergehenden Ansprüche, ferner mit einer Laserquelle (8) zum Lenken von kurzen Laserpulsen auf die Dünnschichtstruktur (2).

11. Spintronisches Bauelement nach einem der vorhergehenden Ansprüche, ferner mit einem Polarisator (12) für von der Dünnschichtstruktur (2) emittierte THz-Strahlung.

12. Spintronisches Bauelement nach einem der vorhergehenden Ansprüche, ferner mit einer Stromquelle (10), die mit den Anschlüssen (5) des Stromleiters (13) verbunden ist.

13. Spintronisches Bauelement nach einem der vorhergehenden Ansprüche, bei dem die Stromquelle (10) einen Regler zum Regeln einer Stromstärke eines Stroms durch den Stromleiter (13) umfasst.

14. Verfahren zum Erzeugen von THz-Strahlung mit einem spintronischen Bauelement nach einem der Ansprüche 1 bis 13, mit den Schritten:
Erzeugen eines Stromflusses im Stromleiter (13);
Einstrahlen von ultrakurzen Laserpulsen auf die Dünnschichtstruktur (2).

15. Verfahren zum Erzeugen von ultrakurzen elektrischen Impulsen mit einem spintronischen Bauelement nach einem der Ansprüche 1 bis 13, mit den Schritten:
Erzeugen eines Stromflusses im Stromleiter (13);
Einstrahlen von ultrakurzen Laserpulsen auf die Dünnschichtstruktur (2) und
Abgreifen eines resultierenden elektrischen Impulses an Enden des Streifens (5).

## Claims

1. A spintronic device comprising a thin-film structure (2), which comprises at least one strip (5) oriented in a longitudinal direction (x), wherein the strip (5) comprises at least one ferromagnetic layer (4) magnetised in the longitudinal direction, the thin-film structure (2) further comprising at least one metallic nonmagnetic layer (3), wherein the strip is narrow enough to ensure magnetisation of the ferromagnetic layer (4) by shape anisotropy, and wherein a current conductor (13) extends along the strip (5) and is provided with at least two terminals (6) via which a current flow in the longitudinal direction (x) can be driven through the current conductor (13).

2. The spintronic device according to claim 1, **characterised in that** an insulating layer (14) is provided between the current conductor (13) and the strip (5).

3. The spintronic device according to claim 1, **characterised in that** the current conductor (3, 13) has a resistance per unit of length in the longitudinal direction (x) which is smaller than that of the ferromagnetic layer (4).

4. The spintronic device according to one of the preceding claims, **characterised in that** the strip (5) and the current conductor (3, 13) are formed as layers on a substrate (1).

5. The spintronic device according to any one of the preceding claims, **characterised in that**, viewed in the direction of a surface normal (z) of the strip (5), the strip (5) and the current conductor (13) overlap.

6. The spintronic device according to any one of claims 1 to 4, **characterised in that** the strip (5) and the current conductor (13""") lie in planes that are offset relative to one another in the direction of a surface normal (z) of the strip (5), and that, viewed in the direction of the surface normal (z), the strip (5) and a window of the current conductor (13) overlap.

7. A spintronic device according to any one of the preceding claims, **characterised in that** the strip (5) is provided with terminals (15) at its ends.

8. The spintronic device according to any one of the preceding claims, **characterised in that** the thin-film structure (2) is coupled to an antenna.

9. The spintronic device according to one of the preceding claims, in which the strip (5) is a first strip, and a second strip (5) extends parallel to the first strip, and in which current conductors (13) associated with the first and second strips (5) are arranged so as to be subjected to current flow in opposite directions.

10. The spintronic device according to one of the preceding claims, further comprising a laser source (8) for directing short laser pulses onto the thin-film structure (2).

11. The spintronic device according to one of the preceding claims, further comprising a polariser (12) for THz radiation emitted by the thin-film structure (2).

12. The spintronic device according to one of the preceding claims, further comprising a current source (10) connected to the terminals (5) of the current conductor (13).

13. The spintronic device according to any one of the preceding claims, in which the current source (10) comprises a regulator for regulating the magnitude of a current flowing through the current conductor (13).

14. A method for generating THz radiation using a spintronic device according to any one of claims 1 to 13, comprising the steps of:
generating a current flow in the current conductor (13); and
irradiating the thin-film structure (2) with ultrashort laser pulses.

15. A method for generating ultrashort electrical pulses using a spintronic device according to any one of claims 1 to 13, comprising the steps of:
generating a current flow in the current conductor (13);
irradiating the thin-film structure (2) with ultrashort laser pulses; and
tapping a resulting electrical pulse at the ends of the strip (5).

## Revendications

1. Composant spintronique comportant une structure en couche mince (2), qui comprend au moins une bande (5) orientée dans une direction longitudinale (x), ladite bande (5) comprenant au moins une couche ferromagnétique (4) magnétisée dans ladite direction longitudinale, la structure en couche mince (2) comprenant en outre au moins une couche métallique non magnétique (3), la bande étant suffisamment étroite pour garantir la magnétisation de la couche ferromagnétique (4) par anisotropie de forme, et un conducteur de courant (13) s'étendant le long de la bande (5) et étant muni d'au moins deux bornes (6) par l'intermédiaire desquelles un flux de courant peut être induit à travers le conducteur de courant (13)dans la direction longitudinale (x).

2. Composant spintronique selon la revendication 1, **caractérisé en ce qu'**une couche isolante (14) est prévue entre le conducteur de courant (13) et la bande (5).

3. Composant spintronique selon la revendication 1, **caractérisé en ce que** le conducteur de courant (3, 13) présente une résistance linéique dans la direction longitudinale (x) qui est inférieure à celle de la couche ferromagnétique (4).

4. Composant spintronique selon l'une des revendications précédentes, **caractérisé en ce que** la bande (5) et le conducteur de courant (3, 13) sont réalisés sous forme de couches sur un substrat (1).

5. Composant spintronique selon l'une des revendications précédentes, **caractérisé en ce que**, vu dans la direction d'une normale (z) à la surface de la bande (5), la bande (5) et le conducteur de courant (13) se chevauchent.

6. Composant spintronique selon l'une des revendications 1 à 4, **caractérisé en ce que** la bande (5) et le conducteur de courant (13""") se trouvent dans des plans décalés l'un par rapport à l'autre dans la direction d'une normale (z) à la surface de la bande (5) et **en ce que**, vu dans la direction de la normale (z) à la surface, la bande (5) et une fenêtre du conducteur de courant (13) se chevauchent.

7. Composant spintronique selon l'une des revendications précédentes, **caractérisé en ce que** la bande (5) est pourvue de bornes (15) à ses extrémités.

8. Composant spintronique selon l'une des revendications précédentes, **caractérisé en ce que** la structure en couche mince (2) est couplée à une antenne.

9. Composant spintronique selon l'une des revendications précédentes, dans lequel la bande (5) est une première bande, et une deuxième bande (5) s'étend parallèlement à la première bande, et dans lequel des conducteurs de courant (13) associés aux première et deuxième bandes (5) sont disposés de manière à être soumis à un flux de courant dans des directions opposées.

10. Composant spintronique selon l'une des revendications précédentes, comprenant en outre une source laser (8) destinée à diriger de courtes impulsions laser vers la structure en couche mince (2).

11. Composant spintronique selon l'une des revendications précédentes, comprenant en outre un polariseur (12) pour le rayonnement THz émis par la structure en couche mince (2).

12. Composant spintronique selon l'une des revendications précédentes, comprenant en outre une source de courant (10) reliée aux bornes (5) du conducteur de courant (13).

13. Composant spintronique selon l'une des revendications précédentes, dans lequel la source de courant (10) comprend un régulateur destiné à réguler l'intensité d'un courant traversant le conducteur de courant (13).

14. Procédé de génération d'un rayonnement THz à l'aide d'un composant spintronique selon l'une des revendications 1 à 13, comprenant les étapes consistant à :
générer un flux de courant dans le conducteur de courant (13) ;
irradier la structure en couche mince (2) avec des impulsions laser ultra-courtes.

15. Procédé de génération d'impulsions électriques ultra-courtes à l'aide d'un composant spintronique selon l'une des revendications 1 à 13, comprenant les étapes consistant à:
générer un flux de courant dans le conducteur (13) ;
irradier la structure en couche mince (2) par des impulsions laser ultra-courtes ; et
prélever une impulsion électrique résultante aux extrémités de la bande.
